# EUROPÄISCHE PATENTANMELDUNG

(11) **EP 1 130 352 A2**
(43) Veröffentlichungstag der Anmeldung: **05.09.2001**
(21) Anmeldenummer: 01104637.2
(22) Anmeldetag: 23.02.2001
(51) Int. Cl.: G01B 5/00

(54) **Adapter zum Überprüfen der winkelmässigen Ausrichtung einer präszise zu lagernden Walze**

(30) Priorität: 01.03.2000 DE 20003772 U
(71) Anmelder: Prüftechnik Dieter Busch AG, 85737 Ismaning (DE)
(72) Erfinder: Hermann, Michael, 78050 Villingen (DE)

(57) **Zusammenfassung**

Der Adapter für ein Präzisionsmessinstrument dient der berührungslosen Vermessung von Rollen oder Walzen in der Papier-, Stahl-, Filmindustrie usw. Dieser wird mit Druckluft beaufschlagt. Die Druckluft kann durch eine Mehrzahl von Düsen austreten, so dass ein Druckluftpolster bereitgestellt wird, sobald sich der Adapter genügend nahe an einer Rolle oder Walze befindet.

Neben Adaptern mit fest definierten Oberflächen werden solche vorgestellt, die sich durch variabel einstellbare Düsen auszeichnen.

## Beschreibung

Die Erfindung bezieht sich auf einen Adapter für ein Präzisionsmessinstrument, um insbesondere an einer Druckmaschine die winkelmässige Ausrichtung einer präzise zu lagernden Walze zu ermitteln. Solche Walzen werden darüberhinaus auch bei der Herstellung von Folien, Filmen, Papierbahnen oder Feinblechen in entsprechend anderen Maschinen eingesetzt.

Es ist vorgeschlagen worden, eine Druckmaschine zum Zwecke der Überprüfung ihrer Walzen so zu modifizieren, dass zu den Walzen gehörige Achsen oder Achsstücke mit einer hochplanen Stirnfläche versehen werden, oder mit einem hochpräzise gefertigten Adapter versehen werden, welcher in Verlängerung der Achsrichtung einer solchen Walze zeigt.

An diesen Stirnflächen, oder einem mit einer Walze in Verbindung stehenden Adapter, können dann mittels zumindest eines zweidimensional wirkenden hochpräzise arbeitenden Winkelmessgerätes in Form eines optischen Kreisels die Komponenten der winkelmäsigen Ausrichtung einer zu vermessenden Walze bestimmt werden.

Dieses Verfahren erfordert jedoch einerseits äusserst genau hergestellte Stirnflächen oder anderer Auflageflächen, welche nur mit sehr grossem Aufwand bereitgestellt werden können. Andererseits garantiert das genannte Verfahren noch nicht, dass bei Vorliegen einer exakt ausgerichteten Drehachse einer Walze dann auch deren Mantelfläche exakt ausgerichtet ist. Dies erklärt sich dadurch, dass Exzentrizitäten, Parallelverschiebungen, windschiefe Lagen, oder weitere Geometriefehler der zylindersymmetrischen Achse relativ zur Drehachse möglich sind.

Eine andere Vorgehensweise, gemäss welcher ein Präzisionsinstrument zur Bestimmung der Orientierung von hochgenau gefertigten Walzen direkt auf eine solche positioniert wird, ist mit gewissen Risiken verbunden, da nicht auszuschliessen ist, dass die polierte Oberfläche der Walze durch mehr oder weniger feine Riefen oder Kratzspuren verändert wird.

Das genannte Problem wird dadurch gelöst, dass eine Vorrichtung angegeben wird, welche im wesentlichen ohne direkten mechanischen Kontakt an eine zu prüfende Walze anlegbar ist. Die erfindungsgemässe Vorrichtung bedient sich hierzu fluidischer, insbesondere drucklufttechnischer Einrichtungen und Prinzipien, und zwar bevorzugt auf Basis von Druckluftpolstern. Die Druckluftpolster können nach Maßgabe definiert konturierter Oberflächen erzeugt werden. Sie können aber auch durch Oberflächen bereitgestellt werden, welche durch eine Einstellvorrichtung variabel orientierbar sind, so dass eine Anpassung an unterschiedliche Walzen oder Rollen vorgenommen werden kann.

Zur Bestimmung der Orientierung einer Walze im Raum wird ein geeignetes Präzisionsinstrument, welches z.B. auf Basis mehrerer hochgenauer Laserkreisel arbeitet, gemäss der Erfindung mit einem Fuss oder einem Adapter vorgesehen, welcher druckluftbeaufschlagt ist und das Präzisionselement auf der Oberfläche einer Walze in geringem und definiert einstellbarem Abstand schweben lässt. Der genannte Fuss oder Adapter weist dazu eine Mehrzahl an Luft-Austrittsdüsen auf, welche bevorzugt in einer konkav gewölbten Oberfläche angeordnet sind. Bei Beaufschlagung dieser Düsen mit genügend hohem Luftdruck, ggf. mit einer geeigneten Flüssigkeit oder Flüssigkeits-Gas-Gemisch, kann der Fuss oder der Adapter ohne direkten mechanischen Kontakt an die zu vermessende Walze angelegt werden. Es ist von zusätzlichem Vorteil, dass der Fuss oder der Adapter dann auch relativ leicht über die Walze verschiebbar ist, sowohl in Richtung deren Längsachse, als auch entlang deren Umfang. Je nach Baugrösse des Adapters oder des Fusses, und auch in Abhängigkeit von einem erzielten Schwebe-Abstand ergibt sich ein Gas- bzw. Luftverbrauch von mehreren Litern pro Sekunde, so dass es zweckdienlich sein kann, die Druckluft lokal durch einen genügend grossen fahrbaren Kompressor bereitzustellen, falls eine Versorgung aus Druckluftflaschen nicht ausreicht.

Die Erfindung wird im folgenden anhand der Zeichnung erläutert, wobei
- Fig. 1: eine perspektivische Ansicht auf ein erfindungsgemässes Gerät zeigt, aufgesetzt auf eine zu inspizierende Walze
- Fig. 2: Aufsichten auf einzelne Lamellen zeigt, wie sie zur Herstellung eines Gerätes gemäss Fig. 1 vorgeschlagen werden
- Fig. 3: einen Querschnitt zeigt für ein Gerät mit einer Einstellmöglichkeit für unterschiedliche Walzendurchmesser.

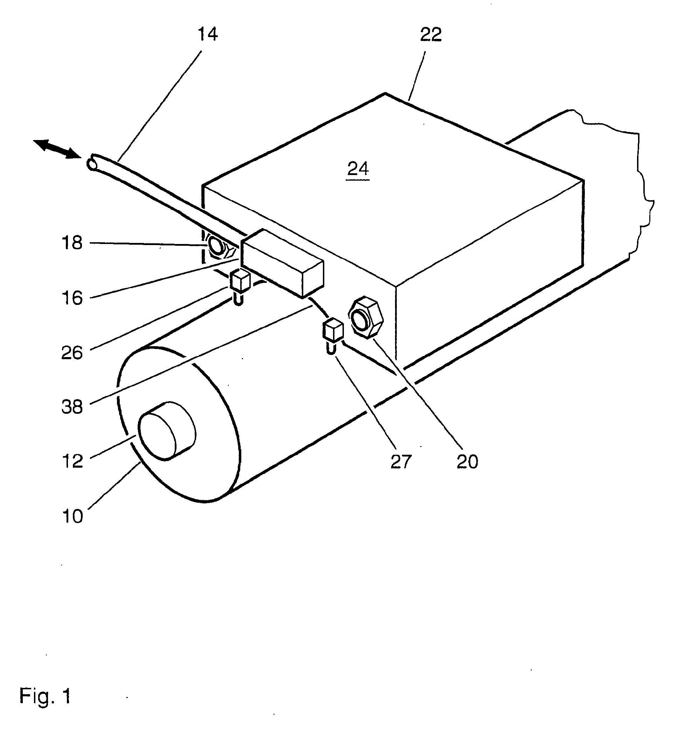

Wie in Fig. 1 gezeigt, sieht die Erfindung in einer ersten Ausgestaltung einen Adapter 22 vor, welcher zwischen ein Präzisons-Winkelmessgerät (nicht gezeigt) und eine zu inspizierende Walze 10 zu messtechnischen Zwecken angeordnet wird. Zur Aufnahme oder Kontaktierung des Präzisions-Winkelmessgerätes ist die Oberfläche 24 vorgesehen. Walze 10 kann beispielsweise mittels Achsstücken 12 drehbar gelagert sein. Adapter 22 weist eine anteilige, konkave Oberfläche auf, deren Anlegekontur mit Bezugsziffer 38 gekennzeichnet ist, und welche relativ genau an die zylindrische Oberfläche der Walze 10 angepasst ist. In die konkave Oberfläche sind Luft-Austrittsdüsen eingearbeitet, so dass bei Versorgung des Adapters 22 mit Druckluft, mittels eines Druckluftschlauches 14 und eines Ansatzstückes 16, eine hinreichend genaue, aber berührungs- oder kontaktlose Annäherung des Adapters 22 an die Walze 10 ermöglicht wird. Bei Bedarf kann der Adapter in das Präzisionsmessgerät integriert werden und stellt dann einen speziellen Geräte-Fuss dar.

In einer einfachen Ausführungsform besteht der Adapter 22 aus einem Hohlkörper, der an der genannten konkaven Teil-Oberfläche mit einer Vielzahl kleiner Düsen versehen ist. Dieser Ausführungsform haftet jedoch der Nachteil an, dass sich die Form der konkaven Oberfläche verändert, und zwar in Abhängigkeit von der Intensität des zugeführten Luftdruckes.

Zur Vermeidung, zumindest zur Verringerung des letztgenannten Problems wird eine Lösung angegeben, welche einen aus Lamellen zusammengesetzten Adapter vorsieht. Mehrere Lamellen und zwei Deckplatten werden dabei mittels Gewindestangen und Muttern 18, 20 etc. zusammengehalten.

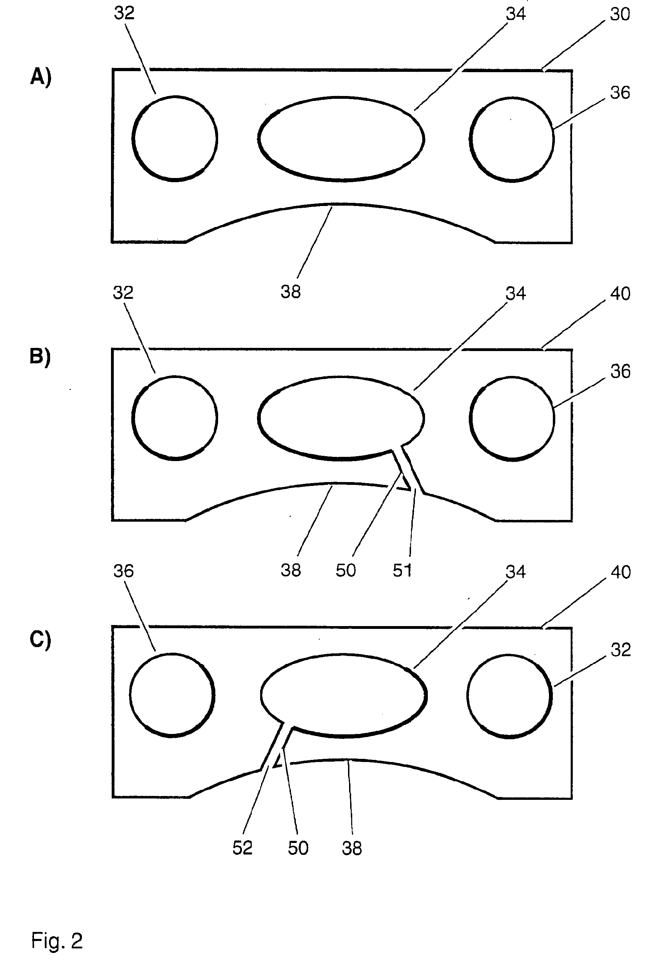

Wie aus Fig. 2 ersichtlich, sind beispielsweise zwei Sorten Lamellen vorgesehen. Fig. 2 a zeigt eine einzelne Lamelle 30, welche nur als Abstandshalter dient. Kontur 38 dient zur Bereitstellung der konkaven Teil-Oberfläche des Adapters. Die kreisförmigen Aussparungen 32, 36 dienen zur Aufnahme der genannten Gewindestange. Aussparung 34 konturiert einen vorgesehenen Druckluft-Versorgungskanal, welcher von Ansatzstück 16 gespeist wird und an seinem rückwärtigen Ende durch eine Deckplatte abgeschlossen ist.

Fig. 2 b und Fig. 2 c zeigt einen weiteren Lamellen-Typus, dessen Form weitgehend der in Fig. 2a gezeigten Ausführung entspricht, jedoch mit Düsen-Kanälen 50 versehen ist, welche in Düsen 51, 52 enden

Die gezeigten Lamellen können beispielsweise aus ca. 0,3 bis 1,0 mm starkem Aluminium-, Stahl-, Magnesium- oder Titanblech gefertigt sein, wobei Aluminium aus Kosten- und Gewichtsgründen bevorzugt ist. Es ist auch eine gemischte Verwendung unterschiedlicher Materialien denkbar, zum Beispiel Titanlamellen im Wechsel mit Plastik-Lamellen, um Gewicht einzusparen.

Gemäss der Erfindung werden die Lamellen als Schichtenfolge zusammengesetzt, und zwar beispielsweise so, dass sich eine Reihenfolge a - b - a - c - a - b - a - c - a - b - a - c usw. ergibt (gemäss Fig. 2 ), bis die gewünschte Breite des Adapters erreicht ist. ( Zur weiteren Gewichtseinsparung des Adapters können viele zusätzliche Aussparungen in den Lamellen vorgesehen sein.)

Wird ein geschichtetes und mit Deckplatten zusammengeschraubtes Lamellen-Paket in der in Fig. 1 gezeigten Art mit Druckluft beaufschlagt, so tritt die Luft an den Düsen 51, 52 aus und erzeugt einen Luftfilm (Luftpolster), welcher den Adapter 22 samt an diesem angebrachten Präzisionsinstrument geringfügig, aber definiert von der Walze 10 hebt und beabstandet.

Solange der Adpter 22 noch nicht auf die Walze 10 aufgesetzt ist, wird Druckluft verbraucht, ohne dass dies eigentlich erforderlich ist.

Als Abhilfe kann eine pneumatisch oder elektrisch betätigbare Hilfs-Stützvorrichtung 26, 27 (und weitere, nicht gezeigte rückseitige Stützvorrichtungen) vorgesehen werden. Diese Hilfs-Stützvorrichtungen weisen extendierbare Stütz-Stangen auf, welche mit weichen Plastic-Füssen versehen sind. Bei ausgefahrenen Stütz-Stangen kann der Adapter 22 ohne Gefahr für die Walze 10, und auch zum Vorteil verwendeter Laserkreisel des Präzisions-Instrumentes, auf die Walze 10 abgesetzt werden. Wird sodann die Druckluftversorgung für den Adapter eingeschaltet, können die Stütz-Stangen zurückgefahren werden, so dass sich der Adapter der Walze nähern kann, bis die vorgesehene Beabstandung durch den aufgebauten Luftfilm wirksam wird.

Für sehr grosse Adapter, mit Dimensionen von 1 Meter * 0,7 m * 0,4 m ist es sinnvoll, diesen aus Magnesium- oder Titanblechen zu fertigen, welche mit einer Vielzahl zusätzlicher Aussparungen versehen sind, so dass das Gesamtgewicht in Grenzen gehalten wird. Es ist auch möglich, mehrere dieser Adapter mittels Verbindungsstangen zu kombinieren, so dass effektive Adapterlängen von ca. 2 bis 3 m erreicht werden können.

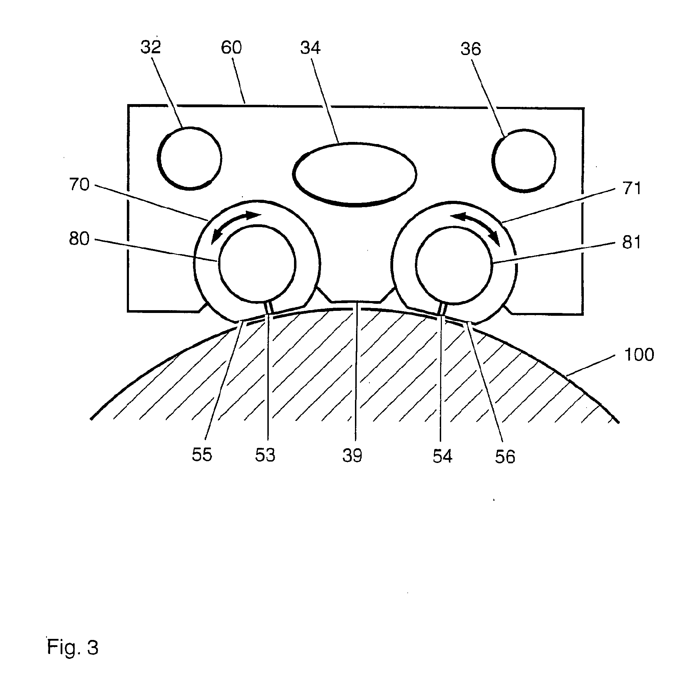

In einer weiteren Ausgestaltung der Erfindung gemäß Fig. 3 wird ein Adapter 60 vorgeschlagen, welcher an unterschiedlich dimensionierte Walzen 100 angepasst werden kann. Zu diesem Zweck sind zwei Hohlzylinder 70, 71 vorgesehen, welche sich im wesentlichen über die Länge des Adapters erstrecken und Innenwände 80, 81 aufweisen. In Längsrichtung der Hohlzylinder sind Düsensätze 53, 54 angeordnet. Diese haben den Zweck, Druckluft aus dem Innenraum des Hohlzylinders nach außen zu leiten, so dass ebenfalls eine Luftpolsterbildung und eine Beabstandung des Adapters 60 von einer zu vermessenden Walze 100 bereitgestellt werden kann. Zur Verbesserung des genannten Effektes können plane Schlifflächen in die Hohlzylinder 70, 71 eingebracht werden, wie dies durch Bezugsziffem 55 und 56 ausgewiesen ist. Die Hohlzylinder 70, 71 können innerhalb des Adapters 60 vermittels geigneter Lager, insbesondere zweckmäßig durch die gezeigte Gleitlagerung, um ihre Längsachse verschwenkt werden. Hierzu sind geeignete Einstellvorrichtungen vorgesehen, welche aus Gründen der schematisierten Zeichnung nicht näher illustriert sind. Auf diese Weise ist es also möglich, die Düsen zur Erzeugung des Luftkisseneffektes auf einen jeweiligen Walzendurchmesser anzupassen, was in einer Walzenstraße mit einer Vielzahl unterschiedlicher Walzen von großem praktischen Vorteil sein kann. - Da die Hohlzylinder mit erheblicher Genauigkeit gelagert und geführt werden müssen, ist es von Vorteil, die vorgesehene Lagerung ein- und nachstellbar auszuführen, oder mittels Gußtechnik die Hohlzylinder gleich bei der Anfertigung des Adapters in diesen direkt einzubetten. - Bei Bedarf können auch mehr als zwei Hohlzylinder oder verschwenkbare Düsensätze vorgesehen sein.

## Patentansprüche

1. Adapter zum Ansetzen eines hochpräzisen Winkelmessgerätes an eine Walze, mit einer konkav konturierten Oberfläche, welche mit einer Mehrzahl von Düsen versehen ist, die mit Druckluft beaufschlagt werden können.

2. Adapter nach Anspruch 1, gekennzeichnet durch einen Aufbau aus einer Vielzahl miteinander laminierter Einzelblechstücke (30, 40).

3. Adapter nach Anspruch 1 oder 2, **dadurch gekennzeichnet**, dass eine motorisch betätigbare und mit vergleichsweise weichen Stützfüssen versehene Hilfs-Aufsetzeinrichtung (26, 27) vorgesehen ist.

4. Adapter nach Anspruch 2, **dadurch gekennzeichnet**, dass die Einzelblechstücke aus Titan, Magnesium oder einer Legierung davon gefertigt sind.

5. Einstellbarer Adapter zum Ansetzen eines hochpräzisen Winkelmessgerätes an eine Walze, mit verschwenkbaren Luftaustrittsflächen, welche mit einer Mehrzahl von Düsen versehen sind, die mit Druckluft beaufschlagt werden können.

6. Einstellbarer Adapter nach Anspruch 5, gekennzeichnet durch Hohlzylinder (70, 71), welche mit Düsensätzen (53, 54) ausgestattet sind, wobei die Hohlzylinder um ihre Längsachse verschwenkbar sind und die genannte Längsachse in parallele Lage zur Längsachse einer zu vermessenden Walze (100) bringbar ist.

7. Verfahren zur meßtechnischen Erfassung der räumlichen Orientierung von Walzen oder Rollen, **dadurch gekennzeichnet**, dass ein mit hoher Präzision und absolut anzeigendes Winkelmeßgerät auf einen Adapter gemäß einem der Ansprüche 1 bis 6 angebracht wird und die Kombination aus Winkelmeßgerät und Adapter unter Verwendung von Druckluft oder eines Fluids auf eine zu vermessende Walze oder Rolle (100) aufgesetzt wird.

8. Verwendung eines Adapters nach einem der Ansprüche 1 bis 6 zur Durchführung eines Verfahrens nach Anspruch 7.
